# EUROPEAN PATENT SPECIFICATION

(11) **EP 3 076 505 B1**
(45) Date of publication and mention of the grant of the patent: **04.11.2020**
(21) Application number: 14864131.9
(22) Date of filing: 05.11.2014
(51) Int. Cl.: H02B 1/56, B60K 6/20, B61C 17/04

(54) **POWER BOX OF HYBRID RAILWAY VEHICLE, AND HYBRID RAILWAY VEHICLE**
STROMKASTEN FÜR EIN HYBRIDSCHIENENFAHRZEUG UND HYBRIDSCHIENENFAHRZEUG
BOÎTIER D'ALIMENTATION ÉLECTRIQUE DE VÉHICULE FERROVIAIRE HYBRIDE, ET VÉHICULE FERROVIAIRE HYBRIDE

(30) Priority: 25.11.2013 CN 201310606690
(43) Date of publication of application: 05.10.2016
(73) Proprietor: CRRC Tangshan Co., Ltd., Fengrun District Tangshan Hebei 063035 (CN)
(72) Inventor: HUANG, Liewei, Tangshan Hebei 063035 (CN); LI, Minggao, Tangshan Hebei 063035 (CN); LI, Ming, Tangshan Hebei 063035 (CN); LI, Guoqing, Tangshan Hebei 063035 (CN); LIU, Bin, Tangshan Hebei 063035 (CN); HAN, Lu, Tangshan Hebei 063035 (CN); KONG, Fanbing, Tangshan Hebei 063035 (CN); SHI, Junjie, Tangshan Hebei 063035 (CN); SHAO, Nan, Tangshan Hebei 063035 (CN)
(74) Representative: Dr. Gassner & Partner mbB
(86) International application number: PCT/CN2014/090377
(87) International publication number: WO 2015/074492

(56) References cited:
- WO-A2-2012/177000
- CN-A- 103 683 393
- CN-U- 203 039 555
- CN-U- 203 157 702
- JP-A- 2006 269 695
- JP-A- 2012 249 503
- JP-A- 2013 135 177
- US-A1- 2007 015 049
- US-A1- 2007 072 061
- US-A1- 2009 126 385
- US-A1- 2013 017 428

## Description

### TECHNICAL FIELD

The present invention relates to a rail vehicle manufacturing technology, and more particularly to a power supply box for a hybrid power rail vehicle and a hybrid power rail vehicle.

### BACKGROUND

In a hybrid power rail vehicle, a power supply box is generally provided on top of the vehicle body, and when the vehicle runs on a track section where no power grid is erected, a storage battery within the power supply box coordinates with a supercapacitor to provide tractive power for the vehicle; in this way, integrated optimization of various power performances can be achieved.

However, during frequent charging and discharging, the storage battery pack generates a lot of heat and has uneven temperature distribution within the power supply box. This often causes reduction in charging and discharging performances and capacity of the battery pack, or failures in the battery pack, and inconsistency of voltages or temperatures in branches. The commonly-used forced air cooling solution does not satisfy requirements of the protection level of the vehicle because the power supply box is arranged on top of the vehicle, and thus there is a need to cool the power supply box.

In the prior art, the cooling manner is to provide a cooling fan within the box body of the power supply box, and an intake grille in a shutter form on the box body, so as to drive airflow through the intake grille for exchange by rotating the fan and achieve forced air cooling.

However, since the power supply box is provided outside the vehicle body, in raining or snowing weather conditions, water drops tend to enter the power supply box via the intake grille. Besides, in spring, blowballs of poplar and willow trees or the like also can enter the power supply box via the intake grille, and such foreign substances are highly detrimental to operation safety of the device. US 2013/017428 A1 discloses an energy storage apparatus and a racking housing assembly having the same. US 2009/126385 A1 discloses a switch cabinet with a closed cooling air circuit and a heat exchanger for dissipating the heat loss from electronic modular units located in an inner area.

### SUMMARY

To overcome the shortcomings above, the present invention provides a power supply box for a hybrid power rail vehicle and a hybrid power rail vehicle. The present invention can achieve effective cooling of the power supply box, improvement of protection performance of the power supply box and thereby guarantee of safety operation.

The present invention provides a power supply box for a hybrid power rail vehicle, including: a closed box body with an accommodating cavity formed therein, and a power pack accommodated within the box body; a blowing pipe fixedly arranged on one side outside the box body, wherein, the blowing pipe is provided with an inlet for inflow of a cooling gas and at least one blowing branch pipe, and the blowing pipe is communicated with the box body via the blowing branch pipe; a discharging pipe fixedly arranged on other side outside the box body, wherein, the discharging pipe is provided with an outlet for outflow of the gas having absorbed heat and at least one discharging branch pipe, and the discharging pipe is communicated with the box body via the discharging branch pipe at the side facing away from the blowing branch pipe; where, the number of each of the blowing pipe and the discharging pipe is at least two, and the at least two blowing pipes and the at least two discharging pipes are arranged in a one-to-one correspondence manner; where, the box body is in a cuboid shape, and includes a first sidewall and an opposed second sidewall, the blowing branch pipe is communicated with the first sidewall, and the discharging branch pipe is communicated with the second sidewall; and where the first sidewall is to be mounted upward and the second sidewall is mounted downward onto a vehicle body of a hybrid power rail vehicle including the power supply box, or the second sidewall is to be mounted upward and the first sidewall is mounted downward onto the vehicle body.

The present invention also provides a hybrid power rail vehicle, including: a vehicle body, an air-conditioner blowing system and the power supply box provided on the vehicle body as described herein; wherein, an inlet of the blowing pipe of the power supply box and an outlet of the discharging pipe of the power supply box are communicated with the air-conditioner blowing system.

In the power supply box provided in the present invention, by means of a closed box body provided with a blowing pipe and a discharging pipe, the cooling gas in the air conditioning system can be utilized to effectively cool the power supply box, so that the power supply box can operate normally with no fault, and meanwhile, the design of such closed structure can effectively protect power pack inside thereof, thereby satisfying outside mounting requirements of the vehicle, preventing impurities, such as water, dust, and blowballs of willow trees from being detrimental to the operating safety, and effectively improving the protection level of the power supply box.

### BRIEF DESCRIPTION OF DRAWINGS

FIG. 1 is a structural schematic diagram of a power supply box not according to the present invention;
FIG. 2 is a structural schematic diagram of a power supply box according to an embodiment of the present invention; and
FIG. 3 is a structural schematic diagram of a power supply box according to another embodiment of the present invention.

### DESCRIPTION OF EMBODIMENTS

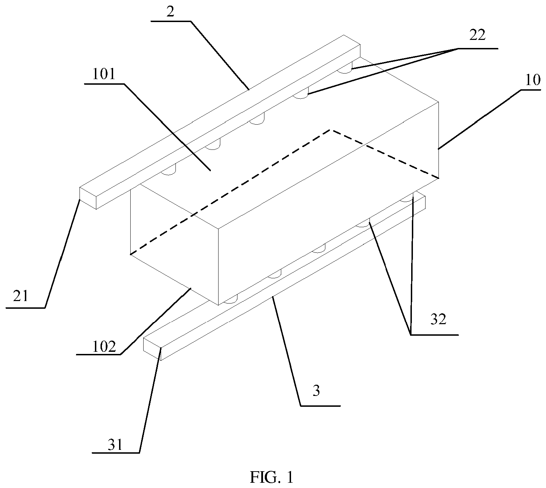

FIG. 1 is a structural schematic diagram of a power supply box for a hybrid power rail vehicle not according to the present invention; referring to FIG. 1, this embodiment provides a power supply box, including: a closed box body 10 with an accommodating cavity formed therein, and a power pack accommodated within the box body; a blowing pipe 2 fixedly arranged on one side outside the box body 10, wherein, the blowing pipe 2 is provided with an inlet 21 for inflow of a cooling gas and at least one blowing branch pipe 22, and the blowing pipe 2 is communicated with the box body 10 via the blowing branch pipe 22; a discharging pipe 3 fixedly arranged on other side outside the box body 10, wherein, the discharging pipe 3 is provided with an outlet 31 for outflow of the gas having absorbed heat and at least one discharging branch pipe 32, and the discharging pipe 3 is communicated with the box body 10 via the discharging branch pipe 32 at the side facing away from the blowing branch pipe 22.

Specifically, the box body 10 can be a casing in a cuboid shape or other irregular shapes, an accommodating cavity for accommodating a power pack can be formed therein; wherein, the power pack described above can be a storage battery and/or a supercapacitor. The blowing pipe 2 and the discharging pipe 3 can be located on two opposite sides of the box body 10, for example, the blowing pipe 2 can be located above the top of the box body, and connected to the top surface of the box body 10 via the blowing branch pipe 22, and meanwhile, the discharging pipe 3 can be located below the base plate of the box body 10, and connected to the bottom surface of the box body 10 via the discharging branch pipe 32; alternatively, the blowing pipe 2 and the discharging pipe 3 can be located on the left and right sides thereof, respectively, and the blowing branch pipe 22 and the discharging branch pipe 32 also can be connected to the left and right sides of the box body 10, respectively.

The blowing pipe 2 and the discharging pipe 3 can be a hollow straight pipe that is closed at one end and open at the other end, the open end can accordingly form an inlet 21 of the blowing pipe 2 and an outlet 31 of the discharging pipe 3; there can be one or more blowing branch pipes 22, one end of the blowing branch pipe 22 is communicated with the blowing pipe 2 and the other end thereof is communicated with the box body 10, so that the gas entering the blowing pipe 2 via the inlet 21 can enter the accommodating cavity within the box body 10 only via the blowing branch pipe 22, and meanwhile, the gas within the accommodating cavity can outflow only from the discharging branch pipe 32 and the discharging pipe 3 via the outlet 3.

The power supply box provided in this embodiment can be mounted on top of the outer side of the vehicle body when it is used on the hybrid power rail vehicle; the inlet 21 of the blowing pipe 2 can be connected to a blowing pipeline of the air conditioning system of the hybrid power rail vehicle, so that the outlet of the discharging pipe 3 can be connected to a return air pipeline of the air conditioning system of the hybrid power rail vehicle; then, the cooling gas in the air conditioning system of the hybrid power rail vehicle enters the box body 10 at one side via the blowing pipe 2 from the blowing pipeline, and forms high-temperature gas when passing through the power pack and absorbing the heat released by the power pack during operation, the high-temperature gas outflows from the discharging pipe 3 and returns to the air conditioning system of the hybrid power rail vehicle via the return air pipeline.

In the power supply box provided in this embodiment, by means of a closed box body provided with a blowing pipe and a discharging pipe, the cooling gas in the air conditioning system can be utilized to effectively cool the power supply box, so that the power supply box can operate normally with no fault, and meanwhile, the design of such closed structure can effectively protect the power pack therein, thereby satisfying outside mounting requirements of the vehicle, preventing impurities, such as water, dust, and blowballs of willow trees from being detrimental to the operating safety, and effectively improving the protection level of the power supply box.

Preferably, the blowing pipe 2 is provided with a fan for pressing a cooling gas into the box body 10; or the discharging pipe 3 is provided with a fan for extracting the gas having absorbed heat in the box body 10; therefore, gas circulation can be facilitated via the fan, to further improve cooling effect.

According to the present invention, the box body 10 is in a cuboid shape, and has a first sidewall 101 and an opposed second sidewall 102, the blowing branch pipe 22 is communicated with the first sidewall 101, and the discharging branch pipe 32 is communicated with the second sidewall 102.

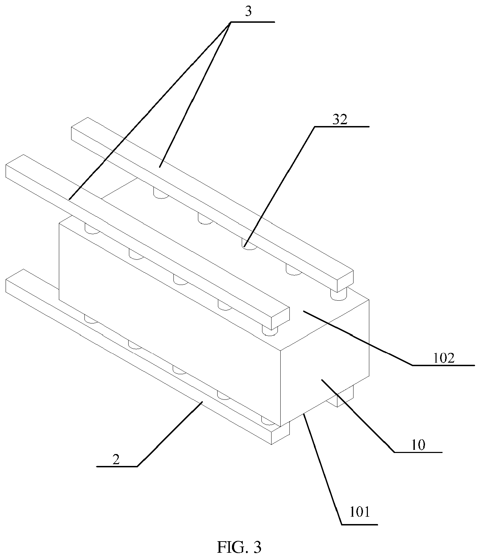

It should be noted that, when mounted, the first sidewall 101 can be mounted upward and the second sidewall 102 can be mounted downward onto the vehicle body, that is, a top blowing circulation mode can be formed; alternatively, the second sidewall 102 can be mounted upward and the first sidewall 101 can be mounted downward onto the vehicle body, that is, a bottom blowing circulation mode can be formed (as shown in FIG. 3).

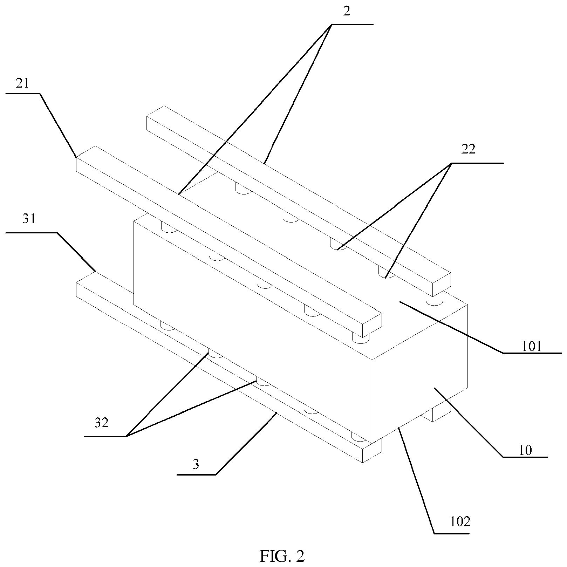

According to the present invention, as shown in FIG. 2, the number of each of the blowing pipe 2 and the discharging pipe 3 is at least two, and the at least two blowing pipes 2 and the at least two discharging pipes 3 are arranged in a one-to-one correspondence manner. Preferably, the blowing pipe 2 and the discharging pipe 3 can be two; each of the blowing pipes 2 and each of the discharging pipes 3 extend in parallel; there are at least two blowing branch pipes 22 formed between each of the blowing pipes 2 and the first sidewall 101, and there are at least two discharging branch pipes 32 formed between each of the discharging pipes 3 and the second sidewall 102; each of the blowing branch pipes 22 communicated with the same blowing pipe 2 and each of the discharging branch pipes 32 communicated with the corresponding discharging pipe 3 are arranged in a one-to-one correspondence manner.

Another embodiment of the present invention provides a rail vehicle, including: a vehicle body, an air-conditioner blowing system and the power supply box, provided on the vehicle body as described in any one of the above embodiments; wherein, an inlet of the blowing pipe of the power supply box and an outlet of the discharging pipe of the power supply box are communicated with the air-conditioner blowing system, that is, the blowing pipe is communicated with the blowing pipeline of the air-conditioning system, and the discharging pipe is communicated with the discharging pipeline of the air-conditioning system, so that cooling medium of the air-conditioning system can be partially drained to the power supply box, so as to form a circulation branch for cooling the power supply.

In the power supply box provided in this embodiment, the power supply box is provided with a closed box body having a blowing pipe and a discharging pipe, and utilizes the cooling gas in the air conditioning system to effectively cool the power supply box, so that the power supply box can operate normally with no fault, and meanwhile, the design of such closed structure can effectively protect the power pack inside thereof, thereby satisfying outside mounting requirements of the vehicle, preventing impurities, such as water, dust, and blowballs of willow trees from being detrimental to the operating safety, and effectively improving the protection level of the power supply box.

Finally, it should be noted that the above embodiments are merely provided for describing the technical solutions of the present invention, but not intended to limit the present invention. It should be understood by persons skilled in the art that although the present invention has been described in detail with reference to the foregoing embodiments, modifications can be made to the technical solutions described in the foregoing embodiments, as long as they fall within the scope of the appended claims.

## Claims

1. A power supply box for a hybrid power rail vehicle, comprising: a closed box body (10) with an accommodating cavity formed therein, and a power pack accommodated within the box body (10); wherein a blowing pipe (2) is fixedly arranged on one side outside the box body (10), wherein, the blowing pipe (2) is provided with an inlet (21) for inflow of a cooling gas and at least one blowing branch pipe (22), and the blowing pipe (2) is communicated with the box body (10) via the blowing branch pipe (22); a discharging pipe (3) is fixedly arranged on other side outside the box body (10), wherein, the discharging pipe (3) is provided with an outlet (31) for outflow of the gas having absorbed heat and at least one discharging branch pipe (32), **characterized in that** the discharging pipe (3) is communicated with the box body (10) via the discharging branch pipe (32) at the side facing away from the blowing branch pipe (22); wherein the number of each of the blowing pipe (2) and the discharging pipe (3) is at least two, and the at least two blowing pipes (2) and the at least two discharging pipes (3) are arranged in a one-to-one correspondence manner; wherein, the box body (10) is in a cuboid shape, and comprises a first sidewall (101) and an opposed second sidewall (102), the blowing branch pipe (22) is communicated with the first sidewall (101), and the discharging branch pipe (32) is communicated with the second sidewall (102); and wherein the first sidewall (101) is to be mounted upward and the second sidewall (102) is mounted downward onto a vehicle body of a hybrid power rail vehicle comprising the power supply box, or the second sidewall (102) is to be mounted upward and the first sidewall (101) is mounted downward onto the vehicle body.

2. The power supply box according to claim 1, wherein, each of the blowing pipes (2) and each of the discharging pipes (3) extend in parallel; there are at least two blowing branch pipes (22) formed between each of the blowing pipes (2) and the first sidewall (101), and there are at least two discharging branch pipes (32) formed between each of the discharging pipes (3) and the second sidewall (102); each of the blowing branch pipes (22) communicated with the same blowing pipe (2) and each of the discharging branch pipes (32) communicated with the corresponding discharging pipe (3) are arranged in a one-to-one correspondence manner.

3. The power supply box according to claim 1 or 2, wherein, the blowing pipe (2) is provided with a fan for pressing a cooling gas into the box body (10); or
the discharging pipe (3) is provided with a fan for extracting the gas having absorbed heat in the box body (10).

4. A hybrid power rail vehicle, **characterized by** comprising: a vehicle body, an air-conditioner blowing system and the power supply box provided on the vehicle body according to any one of claims 1 to 3; wherein, an inlet (21) of the blowing pipe (2) of the power supply box and an outlet (31) of the discharging pipe (3) of the power supply box are communicated with the air-conditioner blowing system.

## Patentansprüche

1. Stromkasten für ein Hybridschienenfahrzeug, bestehend aus:
einen geschlossenen Kastenkörper (10) mit einem darin ausgebildeten Aufnahmehohlraum, und ein innerhalb des Kastenkörpers (10) untergebrachtes Antriebsaggregat; wobei ein Blasrohr (2) auf einer Seite außerhalb des Kastenkörpers (10) fest angeordnet ist, wobei das Blasrohr (2) mit einem Einlass (21) zum Einströmen eines Kühlgases und mindestens einem Blasverzweigungsrohr (22) versehen ist, und das Blasrohr (2) über das Blasverzweigungsrohr (22) mit dem Kastenkörper (10) verbunden ist; ein Austrittsrohr (3) auf der anderen Seite außerhalb des Kastenkörpers (10) fest angeordnet ist, wobei das Austrittsrohr (3) mit einem Auslass (31) für den Ausfluss des Gases, das Wärme absorbiert hat, und mindestens einem Austrittsverzweigungsrohr (32) versehen ist, **dadurch gekennzeichnet, dass**
das Austrittsrohr (3) mit dem Kastenkörper (10) über das Austrittsverzweigungsrohr (32) an der von dem Einblasverzweigungsrohr (22) abgewandten Seite verbunden ist; wobei die Anzahl sowohl des Einblasrohrs (2) als auch des Auslassrohrs (3) mindestens zwei beträgt und die mindestens zwei Einblasrohre (2) und die mindestens zwei Auslassrohre (3) in einer Eins-zu-Eins-Entsprechung angeordnet sind; wobei der Kastenkörper (10) eine quaderförmige Gestalt hat und eine erste Seitenwand (101) und eine gegenüberliegende zweite Seitenwand (102) aufweist, das Blasverzweigungsrohr (22) mit der ersten Seitenwand (101) in Verbindung steht und das Ausstoßverzweigungsrohr (32) mit der zweiten Seitenwand (102) in Verbindung steht; und wobei die erste Seitenwand (101) aufwärts und die zweite Seitenwand (102) abwärts an einem Fahrzeugkörper eines Hybridschienenfahrzeugs montierbar ist, das den Stromkasten umfasst, oder wobei die zweite Seitenwand (102) aufwärts und die erste Seitenwand (101) abwärts an dem Fahrzeugkörper montierbar ist.

2. Stromkasten nach Anspruch 1, wobei jedes der Blasrohre (2) und jedes der Entladungsrohre (3) parallel verlaufen; zwischen jedem der Blasrohre (2) und der ersten Seitenwand (101) mindestens zwei Blaszweigrohre (22) ausgebildet sind, und zwischen jedem der Entladungsrohre (3) und der zweiten Seitenwand (102) mindestens zwei Entladungszweigrohre (32) ausgebildet sind; jedes der Blasverzweigungsrohre (22), die mit dem gleichen Blasrohr (2) in Verbindung stehen, und jedes der Auslassverzweigungsrohre (32), die mit dem entsprechenden Auslassrohr (3) in Verbindung stehen, in einer Eins-zu-Eins-Entsprechung angeordnet sind.

3. Stromkasten nach Anspruch 1 oder 2, wobei das Einblasrohr (2) mit einem Gebläse zum Einpressen eines Kühlgases in den Kastenkörper (10) versehen ist; oder
das Entladungsrohr (3) mit einem Ventilator zum Absaugen des Gases, das die Wärme im Kastenkörper (10) absorbiert hat, versehen ist.

4. Schienenfahrzeug mit Hybridantrieb, **dadurch gekennzeichnet, dass** es umfasst: einen Fahrzeugkörper, ein Gebläsesystem für die Klimaanlage und den Stromkasten, die am Fahrzeugkörper nach einem der Ansprüche 1 bis 3 vorgesehen sind; wobei ein Einlass (21) des Gebläserohrs (2) des Stromversorgungskastens und ein Auslass (31) des Auslassrohrs (3) des Stromversorgungskastens mit dem Gebläsesystem der Klimaanlage verbunden sind.

## Revendications

1. Boîtier d'alimentation électrique pour un véhicule ferroviaire hybride comprenant :
un corps de boîtier (10) fermé avec une cavité de logement formée à l'intérieur et un bloc d'alimentation logé à l'intérieur du corps de boîtier (10), en ce qu'un tuyau de soufflage (2) est disposé de manière fixe sur un côté à l'extérieur du corps de boîtier (10), en ce que le tuyau de soufflage (2) comporte une entrée (21) permettant l'entrée d'un gaz de refroidissement et au moins un tuyau de branchement de soufflage (22), et le tuyau de soufflage (2) est relié au corps de boîtier (10) par l'intermédiaire du tuyau de branchement de soufflage (22) ; un tuyau d'évacuation (3) est disposé de manière fixe sur un autre côté à l'extérieur du corps de boîtier (10), en ce que le tuyau d'évacuation (3) comporte une sortie (31) permettant l'évacuation du gaz ayant absorbé de la chaleur et au moins un tuyau de branchement d'évacuation (32), **caractérisé en ce que**
le tuyau d'évacuation (3) est relié au corps de boîtier (10) par l'intermédiaire du tuyau de branchement d'évacuation (32) sur le côté opposé au tuyau de branchement de soufflage (22) ; **en ce que** le nombre de chacun des tuyaux de soufflage (2) et des tuyaux d'évacuation (3) est d'au moins deux, et au moins les deux tuyaux de soufflage (2) et au moins les deux tuyaux d'évacuation (3) sont disposés en correspondance biunivoque ; **en ce que** le corps de boîtier (10) est de forme cuboïde et comprend une première paroi latérale (101) et une seconde paroi latérale (102) opposée, le tuyau de branchement de soufflage (22) est relié à la première paroi latérale (101) et le tuyau de branchement d'évacuation (32) est relié à la seconde paroi latérale (102) ; et **en ce que** la première paroi latérale (101) doit être montée vers le haut et la seconde paroi latérale (102) est montée vers le bas sur une caisse de véhicule d'un véhicule ferroviaire hybride comprenant le boîtier d'alimentation électrique, ou la seconde paroi latérale (102) doit être montée vers le haut et la première paroi latérale (101) est montée vers le bas sur la caisse de véhicule.

2. Boîtier d'alimentation électrique selon la revendication 1, en ce chacun des tuyaux de soufflage (2) et chacun des tuyaux d'évacuation (3) s'étendent parallèlement ; étant donné au moins deux tuyaux de branchement de soufflage (22) formés entre chacun des tuyaux de soufflage (2) et la première paroi latérale (101), et étant donné au moins deux tuyaux de branchement d'évacuation (32) formés entre chacun des tuyaux d'évacuation (3) et la seconde paroi latérale (102) ; chacun des tuyaux de branchement de soufflage (22) relié au même tuyau de soufflage (2) et chacun des tuyaux de branchement d'évacuation (32) relié au tuyau d'évacuation (3) correspondant sont disposés en correspondance biunivoque.

3. Boîtier d'alimentation électrique selon la revendication 1 ou 2, en ce que le tuyau de soufflage (2) comporte un ventilateur permettant de comprimer un gaz de refroidissement dans le corps de boîtier (10) ; ou
le tuyau d'évacuation (3) comporte un ventilateur permettant d'extraire le gaz ayant absorbé de la chaleur dans le corps de boîtier (10).

4. Véhicule ferroviaire hybride, **caractérisé en ce qu'**il comprend : une caisse de véhicule, un système de soufflage de conditionnement d'air et le boîtier d'alimentation électrique ménagés sur la caisse de véhicule selon l'une des revendications 1 à 3 ; **en ce qu'**une entrée (21) du tuyau de soufflage (2) du boîtier d'alimentation électrique et une sortie (31) du tuyau d'évacuation (3) du boîtier d'alimentation électrique sont reliées au système de soufflage de conditionnement d'air.
